# EUROPEAN PATENT APPLICATION

(11) **EP 1 884 337 A1**
(43) Date of publication of application: **06.02.2008**
(21) Application number: 06746543.5
(22) Date of filing: 17.05.2006
(51) Int. Cl.: B29C 45/37, B29C 33/38, B29L 17/00

(54) **DISC MOLDING MOLD, MIRROR-SURFACE DISC, AND METHOD FOR PRODUCING MOLD FOR DISC MOLDING**

(30) Priority: 23.05.2005 JP 2005149846
(71) Applicant: SUMITOMO HEAVY INDUSTRIES, LTD., Shinagawa-ku, Tokyo 141-8686 (JP); SEIKOH GIKEN CO., LTD., Matsudo-shi, Chiba 270-2214 (JP)
(72) Inventor: SHIBUTANI, Yuji, Matsudo-shi, Chiba;2702214 (JP); INADA, Yuichi c/o SUMITOMO HEAVY INDUSTRIES, LTD.,, Chiba-shi, Chiba 2630001 (JP)
(74) Representative: Wagner & Geyer
(86) International application number: PCT/JP2006/309840
(87) International publication number: WO 2006/126435

(57) **Abstract**

An object is to improve the durability of a mold and reduce the cost of the mold. A disc-molding mold includes a first mold; and a second mold disposed in opposition to the first mold such that the second mold can advance and retreat. One of the first and second molds includes a base material having a roughened surface, and a coating layer formed on the surface of the base material through coating treatment. A stamper attachment surface is defined on a surface of the coating layer. Since a coating layer is formed on the roughened surface of the base material through coating treatment, the area of contact between the base material and the coating layer can be increased. Therefore, the adhesion force between the base material and the coating layer increases, so that the coating layer becomes unlikely to peel off, whereby the durability of the mold can be improved, and the cost of the mold can be reduced.

## Description

### TECHNICAL FIELD

The present invention relates to a disc-molding mold, a mirror-surface disc, and a method for producing a mold for disc molding.

### BACKGROUND ART

Conventionally, in a molding machine, such as an injection molding machine for molding disc substrates, resin melted within a heating cylinder is charged into a cavity in a disc-molding mold, and is then cooled and solidified in the cavity so as to obtain a disc substrate.

For such a molding process, the above-mentioned injection molding machine includes the disc-molding mold consisting of a stationary-side mold assembly (first mold) and a movable-side mold assembly (second mold); an injection apparatus for charging resin into a cavity; and a mold clamp apparatus for bringing the movable-side mold assembly into contact with the stationary-side mold assembly and separating the movable-side mold assembly from the stationary-side mold assembly. The mold clamp apparatus is operated so as to advance and retreat the movable-side mold assembly to thereby close, clamp, and open the disc-molding mold. When the mold is clamped, a cavity is formed between a mirror-surface disc of the stationary-side mold assembly and a mirror-surface disc of the movable-side mold assembly.

The injection apparatus includes a heating cylinder; an injection nozzle attached to a front end of the heating cylinder; and a screw disposed in the heating cylinder so that the screw can rotate and can advance and retreat.

In a metering step, the screw is rotated, whereby resin is melted and accumulated in front of the screw, and the screw is retreated accordingly. During this period, the disc-molding mold is closed and clamped. Subsequently, in an injection step, the screw is advanced, whereby the resin accumulated in front of the screw is injected from the injection nozzle and charged into the cavity. In a cooling step, the resin in the cavity is cooled, and hole punching is performed, whereby a disc substrate is completed. Subsequently, the disc-molding mold is opened, and the disc substrate is removed therefrom.

Notably, a stamper for forming fine projections on an information surface of the disc substrate is attached to one of stationary-side and movable-side mirror-surface discs, and a cavity ring is attached to the other of the stationary-side and movable-side mirror-surface discs, whereby the outer circumferential edge of the cavity is defined by the cavity ring.

Incidentally, when the flatness of a stamper-attachment surface of the mirror-surface disc on which the stamper is attached deceases, the accuracy of molded disc substrates lowers. In view of this, a coating layer of thin film is formed on the surface of the mirror-surface disc.

### DISCLOSURE OF THE INVENTION

### PROBLEMS TO BE SOLVED BY THE INVENTION

However, in the case of the above-described conventional injection molding machine, since the durability of the coating layer determines the durability of the mirror-surface disc, when the mirror-surface disc deteriorates, the mirror-surface disc must be restored through steps of removing the coating layer, lapping the surface of the mirror-surface disc, and forming the coating layer again. Therefore, the restoration of the mirror-surface disc requires a long time, involves troublesome work, and increases the cost of the mirror-surface disc.

An object of the present invention is to solve the above-mentioned problem in the conventional injection molding machine and to provide a mold for disc molding, a mirror-surface disc, and a method for producing a mold for disc molding, which can improve the durability of the mold and reduce the cost,of the mold.

### MEANS FOR SOLVING THE PROBLEMS

To achieve the above object, a disc-molding mold according to the present invention comprises a first mold; and a second mold disposed in opposition to the first mold such that the second mold can advance and retreat.

One of the first and second molds includes a base material having a roughened surface, and a coating layer formed on the surface of the base material through coating treatment. A stamper attachment surface is defined on a surface of the coating layer.

### EFFECTS OF THE INVENTION

According to the present invention, a disc-molding mold comprises a first mold; and a second mold disposed in opposition to the first mold such that the second mold can advance and retreat.

One of the first and second molds includes a base material having a roughened surface, and a coating layer formed on the surface of the base material through coating treatment. A stamper attachment surface is defined on a surface of the coating layer.

In this case, since a coating layer is formed on the roughened surface of the base material through coating treatment, the area of contact between the base material and the coating layer can be increased. Therefore, the adhesion force between the base material and the coating layer increases, so that the coating layer becomes unlikely to peel off, whereby the durability of the mold can be improved, and the cost of the mold can be reduced.

Further, since a large number of fine projections are formed on the stamper attachment surface, the area of contact between the mold and the stamper decreases, and the coefficient of friction therebetween decreases, so that wearing of the stamper can be prevented. As a result, the durability of the stamper can be improved.

### BRIEF DESCRIPTION OF THE DRAWINGS

FIG. 1 is a sectional view of a disc-molding mold according to an embodiment of the present invention.
FIG. 2 is a sectional view showing a main portion of a movable-side mold assembly in the embodiment of the present invention.

### DESCRIPTION OF SYMBOLS

12, 32: mold assembly
36: second mirror-surface disc
62: base material
63: coating layer
s: stamper attachment surface

### BEST MODE FOR CARRYING OUT THE INVENTION

An embodiment of the present invention will next be described in detail with reference to the drawings. In this case, a disc-molding mold (mold apparatus) disposed in an injection molding machine, which is an example molding machine, will be described.

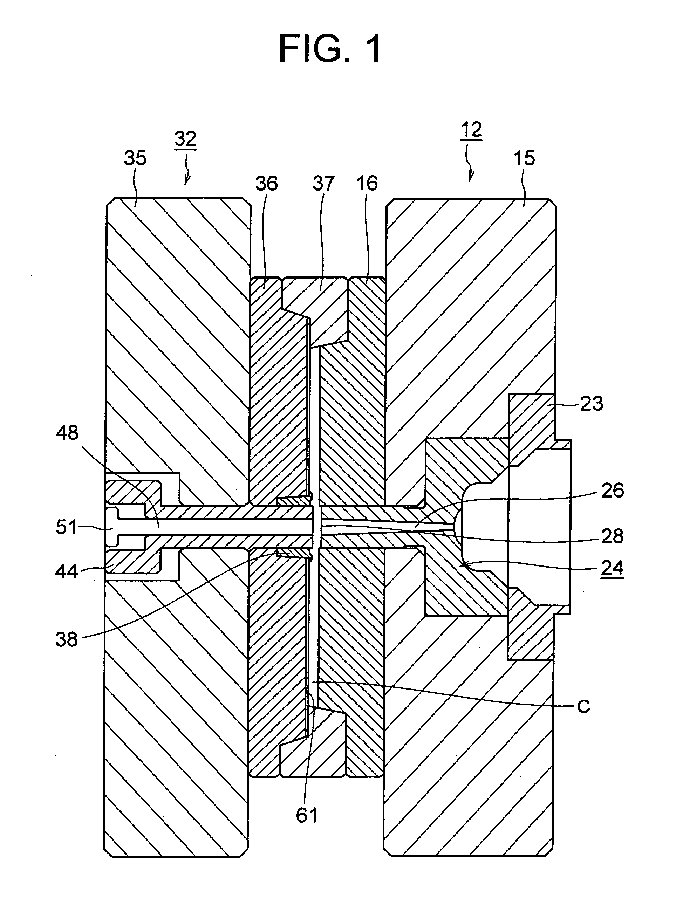

FIG. 1 is a sectional view of a disc-molding mold according to the embodiment of the present invention.

In FIG. 1, reference numeral 12 denotes a stationary-side mold assembly (first mold) attached to an unillustrated stationary platen via an unillustrated attachment plate. The mold assembly 12 includes a base plate (first support plate) 15; a first mirror-surface disc 16 attached to the base plate 15; a locating ring 23 disposed in the base plate 15 in such a manner as to face the stationary platen and adapted to position the base plate 15 with respect to the stationary platen; and a sprue bush 24 disposed adjacent to the locating ring 23. A die 28 is formed at a front end of the sprue bush 24 so that the die 28 faces a cavity C. A sprue 26 is formed in the sprue bush 24 and communicates with the die 28. Resin (molding material) injected from an injection nozzle of an unillustrated injection apparatus passes through the sprue 26. Notably, the injection apparatus includes an unillustrated heating cylinder; the injection nozzle attached to the front end of the heating cylinder; and a screw disposed in the heating cylinder so that the screw can rotate and can advance and retreat.

Further, an unillustrated first annular guide ring is attached to the base plate 15 to extend along the outer circumferential edge of the first mirror-surface disc 16.

Meanwhile, reference numeral 32 denotes a movable-side mold assembly (second mold) attached to an unillustrated movable platen via an unillustrated attachment plate. The mold assembly 32 includes a base plate 35; a second mirror-surface disc 36 attached to the base plate 35; a cylinder 44 which is disposed within the base plate 35 and the second mirror-surface disc 36 such that a rear end of the cylinder 44 faces the movable platen, and a front end thereof faces the mold assembly 12; and a cut punch 48 which is advanced and retreated along the cylinder 44 and the front end of which has a shape corresponding to the die 28. Notably, an intermediate plate (a second support plate) may be disposed between the base plate 35 and the second mirror-surface disc 36.

A stamper 61 for forming fine projections on the information surface of an unillustrated disc substrate (molded product) is attached to the second mirror-surface disc 36. A stamper-holding bush 38 for holding an inner circumferential edge of the stamper 61 is disposed radially outward a front end portion of the cylinder 44. In the present embodiment, the stamper 61 is attached to the second mirror-surface disc 36. However, the stamper 61 may be attached to the first mirror-surface disc 16. In this case, an inner stamper holder is disposed radially outward a front end portion of the sprue bush 24.

An annular cavity ring 37 is disposed along the outer circumferential edge of the second mirror-surface disc 36 and in opposition to the first mirror-surface disc 16 such that the cavity ring 37 can move over a predetermined distance in relation to the second mirror-surface disc 36. An unillustrated second annular guide ring is disposed radially outward the second mirror-surface disc 36 and the cavity ring 37 and in opposition to the first guide ring, and is attached to the base plate 35. The cavity ring 37 projects from the front end surface of the second mirror-surface disc 36. The inner circumferential surface of the cavity ring 37 forms the outer circumferential edge of a disc substrate.

A flange 51 formed integrally with the cut punch 48 is disposed within the rear end portion of the cylinder 44 such that it can advance and retreat. Further, an unillustrated cut-punch return spring is disposed ahead of the flange 51. The cut-punch return spring urges the flange 51 rearward.

Notably, the mold assemblies 12 and 32 constitute a disc-molding mold; and an unillustrated mold-clamping apparatus is disposed in order to bring the mold assembly 32 into contact with the mold assembly 12 and separate the mold assembly 32 away from the mold assembly 12. The mold assembly 32 can be advanced and retreated through drive of a mold-clamping cylinder of the mold-clamping apparatus, whereby the disc-molding mold can be closed, clamped, and opened. When the disc-molding mold is clamped, the above-described cavity C is formed between the first and second mirror-surface discs 16 and 36.

Further, in the mold clamping, when the flange 51 is advanced through drive of an unillustrated drive cylinder, the cut punch 48 is caused to advance so that its front end enters the die 28. As a result, a hole can be formed in the resin within the cavity C. Notably, an unillustrated ejector pin and other components are disposed within the mold assembly 32.

In a metering step, the screw is rotated, whereby resin is melted and stored in front of the screw, and the screw is retreated accordingly. During this period, the disc-molding mold is closed and clamped. Subsequently, in an injection step, the screw is advanced, whereby the resin stored in front of the screw is injected from the injection nozzle and charged into the cavity C. In a cooling step, the resin in the cavity C is cooled, and the cut punch 48 is advanced so as to punch a hole, whereby a disc substrate is completed. Subsequently, the mold is opened, and the disc substrate is removed.

Incidentally, when the flatness of the stamper-attachment surface of the second mirror-surface disc 36 on which the stamper 61 is attached deceases, the accuracy of molded disc substrates lowers. In view of this, a coating layer of thin film is formed on the surface of the second mirror-surface disc 36.

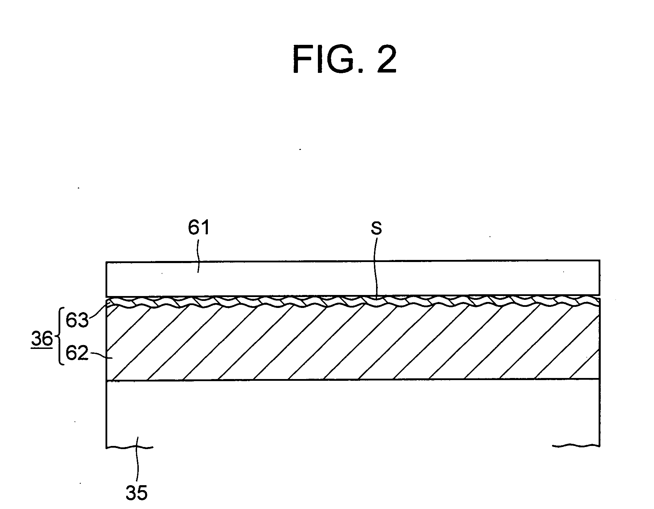

FIG. 2 is a sectional view showing a main portion of the movable-side mold assembly in the embodiment of the present invention.

In FIG. 2, reference numeral 35 denotes the base plate, reference numeral 36 denotes the second mirror-surface disc, reference numeral 61 denotes the stamper, reference numeral 62 denotes a base plate; and reference numeral 63 denotes a coating layer of thin film formed on the base plate 62.

When the coating layer 63 is formed on the base plate 62, shot peening is performed on the surface of the base material 62 as a preliminary process, whereby the surface of the base material 62 is hardened and roughened. Thus, the hardness of the surface of the base material 62 is increased, and a large number of fine projections are formed on the surface of the base material 62.

The base material 62 is formed from steel, stainless steel, special steel, or the like through casting, forging, or the like. Further, in the shot peening, fine particles, such as particles of carborundum, glass beads, ceramic particles, steel balls, which have a particle size of not less than 20 µm but not greater than 200 µm, are blasted, as a shot material, to the surface of the base material 62 at a high blasting speed (in the present embodiment, 50 m/s or higher). Due to collision of the fine particles, compression stress is applied to the surface of the base material 62. Thus, the shot peening is completed.

Subsequently, as a main process, coating treatment is performed on the surface of the base material 62, whereby the coating layer 63 of a hard material such as DLC (diamondlike carbon) is formed; and a stamper attachment surface s for the stamper 61 is defined or formed on the surface of the coating layer 63. In this case, the thickness of the coating layer 63 is rendered sufficiently small; i.e., not less than 0.5 µm but not greater than 3 µm. Therefore, the fine projections of the base material 62 generally appears as it is on the stamper attachment surface s. The surface roughness Ra of the stamper attachment surface s is set to fall within a range of 0.02 µm to 0.30 µm inclusive (as measured in arithmetic average roughness). In this case, the surface roughness Ra was measured in accordance with a method for measuring center line average roughness, which is prescribed in JIS B0601.

Notably, the coating layer 63 may be formed of titanium nitride (TiN) in place of DLC.

In this case, since a large number of fine projections are formed on the surface of the base material 62 in the preliminary process, the area of contact between the base material 62 and the coating layer 63 can be increased. In addition, since the surface of the base material 62 is hardened as described above and does not deform easily; the contact surface between the base material 62 and the coating layer 63 can be stabilized. Therefore, the adhesion force between the base material 62 and the coating layer 63 increases, so that the coating layer 63 becomes unlikely to peel off, whereby the durability of the second mirror-surface disc 36 can be improved. As a result, the durability of the mold assembly 32 can be improved, and the cost of the mold assembly 32 can be reduced.

In addition, since the surface of the base material 62 is activated through shot peening performed therefor, in the subsequent coating process, the adhesion between the base material 62 and the coating layer 63 can be improved.

Incidentally, since a large number of fine projections are formed on the stamper attachment surface s, the area of contact between the coating layer 63 and the stamper 61 decreases. Further, since the hardness of the stamper attachment surface s is high and the difference in hardness between the coating layer 63 and the stamper 61 is large, the coefficient of friction between the coating layer 63 and the stamper 61 can be decreased. Accordingly, although the stamper 61 expands and retracts when the temperature of the stamper 61 changes as a result of charging of resin into the cavity C or cooling of the resin within the cavity C, the small coefficient of friction between the coating layer 63 and the stamper 61 prevents wearing of the stamper 61. As a result, the durability of the stamper 61 can be improved.

The present invention is not limited to the above-described embodiments. Numerous modifications and variations of the present invention are possible in light of the spirit of the present invention, and they are not excluded from the scope of the present invention.

### INDUSTRIAL APPLICABILITY

The present invention can be applied to a disc-molding mold for molding disc substrates.

## Claims

1. A disc-molding mold comprising:
(a) a first mold; and
(b) a second mold disposed in opposition to the first mold such that the second mold can advance and retreat, wherein
(c) one of the first and second molds includes a base material having a roughened surface, and a coating layer formed on the surface of the base material through coating treatment; and
(d) a stamper attachment surface is defined on a surface of the coating layer.

2. A disc-molding mold according to claim 1, wherein the surface roughness Ra of the stamper attachment surface is in a range of 0.02 µm to 0.30 µm inclusive.

3. A disc-molding mold according to claim 1, wherein the roughened surface is formed through shot peening.

4. A disc-molding mold according to claim 1, wherein the coating layer is formed of DLC.

5. A mirror-surface disc comprising:
(a) a base material having a roughened surface; and
(b) a coating layer formed on the roughened surface of the base material through coating treatment, wherein
(c) a stamper attachment surface is defined on a surface of the coating layer.

6. A method for manufacturing a disc-molding mold, comprising:
(a) roughening a surface of a base material of a mold; and
(b) forming a coating layer on the roughened surface of the base material through coating treatment, to thereby define a stamper attachment surface.
